(19) Europäisches Patentamt
European Patent Office
Office européen des brevets

(11) EP 4 345 936 A1

(12) **EUROPEAN PATENT APPLICATION**
published in accordance with Art. 153(4) EPC

(43) Date of publication:
**03.04.2024 Bulletin 2024/14**

(21) Application number: **21958653.4**

(22) Date of filing: **28.09.2021**

(51) International Patent Classification (IPC):
***H01M 4/131*** *(2010.01)* ***H01M 4/50*** *(2010.01)*
***H01M 4/1391*** *(2010.01)*

(52) Cooperative Patent Classification (CPC):
Y02E 60/10

(86) International application number:
**PCT/CN2021/121292**

(87) International publication number:
**WO 2023/050054 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Zhangwan Town, Jiaocheng District**
**Ningde City**
**Fujian 352100 (CN)**

(72) Inventor: **LIU, Wenyuan**
**Ningde City, Fujian 352100 (CN)**

(74) Representative: **Icosa**
**83 avenue Denfert-Rochereau**
**75014 Paris (FR)**

(54) **ELECTROCHEMICAL APPARATUS, AND ELECTRIC DEVICE INCLUDING ELECTROCHEMICAL APPARATUS**

(57) This application provides an electrochemical apparatus and an electric device including the same. The electrochemical apparatus includes a positive electrode plate, where the positive electrode plate includes a positive electrode active material. When a state of charge SOC of the electrochemical apparatus ranges from 90% to 100%, a DSC curve of the positive electrode plate has a first exothermic peak A1 and a second exothermic peak A2 in a temperature range of 150°C to 400°C, where based on a mass of the positive electrode active material, the first exothermic peak A1 is an exothermic peak at a temperature closest to 400°C with a peak intensity greater than 0.1 mW/mg, the second exothermic peak A2 is an exothermic peak at a temperature closest to 150°C with a peak intensity greater than 0.1 mW/mg, and a difference between a peak position Ta of the first exothermic peak A1 and a peak position Tb of the second exothermic peak A2 ranges from 20°C to 150°C. The electrochemical apparatus has good cycling performance, rate performance, and safety performance.

EP 4 345 936 A1

## Description

### TECHNICAL FIELD

This application relates to the electrochemical field, and specifically, to an electrochemical apparatus and an electric device including the same.

### BACKGROUND

Lithium-ion batteries have advantages such as high energy storage density, high open-circuit voltage, low self-discharge rate, long cycle life, and good safety performance, and therefore are widely used in various fields such as electric energy storage, mobile electronic devices, electric vehicles, electric bicycles, and aerospace equipment. As the mobile electronic devices and the electric vehicles enter a stage of rapid development, the market requires lithium-ion batteries to have higher energy density, safety performance, cycling performance, and longer service life.

### SUMMARY

An objective of this application is to provide an electrochemical apparatus and an electric device including the same so as to improve cycling performance, rate performance, and safety performance of the electrochemical apparatus.

A first aspect of this application provides an electrochemical apparatus, including a positive electrode plate, where the positive electrode plate includes a positive electrode active material. When a state of charge SOC of the electrochemical apparatus ranges from 90% to 100%, a DSC (differential scanning calorimetry) curve of the positive electrode plate has a first exothermic peak A1 and a second exothermic peak A2 in a temperature range of 150°C to 400°C. Based on a mass of the positive electrode active material, the first exothermic peak A1 is an exothermic peak at a temperature closest to 400°C with a peak intensity greater than 0.1 mW/mg, the second exothermic peak A2 is an exothermic peak at a temperature closest to 150°C with a peak intensity greater than 0.1 mW/mg, and a difference between a peak position Ta of the first exothermic peak A1 and a peak position Tb of the second exothermic peak A2 ranges from 20°C to 150°C. It can be understood that the preceding exothermic peaks include an exothermic peak formed by interaction of an interfacial protective film and the positive electrode active material. In other words, the peak position Ta and peak intensity of the first exothermic peak A1 and the peak position Tb and peak intensity of the second exothermic peak A2 are jointly determined by the interfacial protective film and the positive electrode active material. Not limited to any theory, based on the mass of the positive electrode active material, the peak intensity of the second exothermic peak A2 is greater than 0.1 mW/mg, and the difference between the peak position Ta of the first exothermic peak A1 at a temperature closest to 400°C and the peak position Tb of the second exothermic peak A2 at a temperature closest to 150°C ranges from 20°C to 150°C, indicating a relatively small difference between the peak positions of the exothermic peaks formed by interaction of the interfacial protective film and the positive electrode active material and relatively high thermal stability of the interface between the positive electrode active material and an electrolyte, making the interfacial protective film difficult to be destroyed at a high temperature, thereby can better protect the surface of the positive electrode active material, suppressing occurrence of side reactions, and increasing stability of the positive electrode active material. In addition, based on the mass of the positive electrode active material, the peak intensity of the second exothermic peak A2 is greater than 0.1 mW/mg, ensuring that there is adequate protective film on the surface of the positive electrode active material. As such, the thermal stability of the electrochemical apparatus can be effectively improved so that the electrochemical apparatus has good cycling performance, rate performance, and safety performance.

In this application, under the condition that a same positive electrode active material is selected for positive electrode plates, parameters such as an electrolyte injection coefficient, and an upper formation voltage limit, a formation temperature, and a formation standing time after packaging of the electrochemical apparatus may be controlled so that the peak positions and peak intensities of the exothermic peaks, and the difference between the peak position Ta of the first exothermic peak A1 and the peak position Tb of the second exothermic peak A2 are controlled within the ranges of this application to achieve the objective of this application, making the electrochemical apparatus has good cycling performance, rate performance, and safety performance. The specific ranges of the electrolyte injection coefficient, and the upper formation voltage limit, the formation temperature, and the formation standing time after packaging of the electrochemical apparatus are not particularly limited in this application, provided that the objective of this application can be achieved.

In an embodiment of this application, the peak position Ta of the first exothermic peak A1 is within a range of 250°C to 400°C, and the peak position Tb of the second exothermic peak A2 is within a range of 200°C to 300°C. In this way, the peak positions of the first exothermic peak A1 and the second exothermic peak A2 are both higher, thereby enhancing the thermal stability of the positive electrode active material and the protective film on the surface of the

positive electrode active material.

In an embodiment of this application, a ratio S of the peak intensity of the first exothermic peak A1 to the peak intensity of the second exothermic peak A2 ranges from 0.1 to 10. For example, the ratio S of the peak intensity of the first exothermic peak A1 to the peak intensity of the second exothermic peak A2 may be 0.1, 0.7, 1.2, 1.4, 1.5, 6.1, 9.8, 10, or any one of values within a range between any two of the preceding numerical values. Further, the ratio S of the peak intensity of the first exothermic peak A1 to the peak intensity of the second exothermic peak A2 ranges from 0.7 to10. Not limited to any theory, the ratio S of the peak intensity of the first exothermic peak A1 to the peak intensity of the second exothermic peak A2 is controlled to be within the preceding range, can reduce difference between the stability of the positive electrode active material and that of the protective film on the surface of the positive electrode active material, which is more conducive for improving cycling performance and rate performance of the electrochemical apparatus.

In an embodiment of this application, after the positive electrode plate has been soaked in N-methylpyrrolidone (NMP) at 25°C for 8 hours, the N-methylpyrrolidone is replaced at the same ratio, and after the positive electrode plate is soaked again twice, the DSC curve of the positive electrode plate has an exothermic peak B at a temperature ranging from 240°C to 400°C. Based on the mass of the positive electrode active material, a peak area of the exothermic peak B is less than 360 J/g. Each time of the positive electrode plate being soaked in NMP, a volume ratio of the positive electrode plate to NMP ranges from 1:10 to 1:20. After the positive electrode plate having been soaked in NMP for three times, most or all of the protective film on a surface of the positive electrode active material has been removed, and therefore a peak position Tc of the exothermic peak B is mainly determined by the positive electrode active material. The peak position Tc of the exothermic peak B is within a range of 240°C to 400°C, and based on the mass of the positive electrode active material, the peak area of the exothermic peak B is less than 360 J/g, indicating good thermal stability of the positive electrode active material. In this way, the thermal stability of the electrochemical apparatus is good, thereby allowing the electrochemical apparatus to have good safety performance.

In an embodiment of this application, the positive electrode active material contains a lithium transition metal composite oxide, and the lithium transition metal composite oxide contains a doping element M, where the doping element M includes at least one of Al, Mg, Ti, Cr, Cu, Fe, Co, W, Zn, Ga, Zr, Ru, Ag, Sn, Au, La, Ce, Pr, Nd, Sm, Nb, or Gd; and the lithium transition metal composite oxide further contains Mn. A doping element being selected from the preceding doping elements better helps improve cycling performance and rate performance of the electrochemical apparatus.

Further, a molar ratio of the doping element M to Mn, $n_M/n_{Mn}$, ranges from 0.1% to 10%. For example, the molar ratio of the doping element M to Mn, $n_M/n_{Mn}$, may be 0.1%, 2%, 4%, 6%, 9%, 10%, or any one of values within a range between any two of the preceding numerical values. Not limited to any theory, controlling the molar ratio of the doping element M to Mn, $n_M/n_{Mn}$, to be within the preceding range is more conducive for improving cycling performance and rate performance of the electrochemical apparatus.

Further, the positive electrode active material contains $Li_xMn_yM_zO_4$, where $0.6 \le x \le 1.2$, $0.8 \le y \le 1$, $0 < z \le 0.2$, and M includes at least one of Al, Mg, Ti, Cr, Cu, Fe, Co, W, Zn, Ga, Zr, Ru, Ag, Sn, Au, La, Ce, Pr, Nd, Sm, Nb, or Gd.

Preferably, the positive electrode active material contains $LiMn_{1.96}Al_{0.04}O_4$, $LiMn_{1.96}Mg_{0.04}O_4$, $LiMn_{1.92}Al_{0.04}Mg_{0.04}O_4$, $LiMn_{1.88}Al_{0.04}Mg_{0.04}Nb_{0.04}O_4$, $LiMn_{1.88}Al_{0.08}Nb_{0.04}O_4$, $LiMn_{1.84}Al_{0.12}Nb_{0.04}O_4$, $LiMn_{1.84}Al_{0.16}O_4$, $LiMn_{1.88}Al_{0.08}Nb_{0.04}O_4$, or the like.

In an embodiment of this application, the doping element M includes at least one of Al or Nb, and by adding such doping element M to the positive electrode active material makes the cycling performance and rate performance of the electrochemical apparatus better.

Further, a molar ratio of a total molar content of Al and Nb to a molar content of Mn, $n_{(Al+Nb)}/n_{Mn}$, ranges from 1% to 10%. For example, the molar ratio of a total molar content of Al and Nb to a molar content of Mn, $n_{(Al+Nb)}/n_{Mn}$, may be 1%, 2%, 4%, 6%, 9%, 10%, or any one of values within a range between any two of the preceding numerical values. Not limited to any theory, controlling the molar ratio of a total molar content of Al and Nb to a molar content of Mn, $n_{(Al+Nb)}/n_{Mn}$, to be within the preceding range is more conducive for improving cycling performance and rate performance of the electrochemical apparatus.

In an embodiment of this application, the positive electrode active material includes secondary particles aggregated from primary particles, where an average particle size Ds of the primary particles ranges from 0.8 μm to 5 μm. For example, the average particle size Ds of the primary particles may be 0.8 μm, 1.2 μm, 2.4 μm, 4.3 μm, 5 μm, or any one of values within a range between any two of the preceding numerical values. Not limited to any theory, an excessively small average particle size Ds of the primary particles leads to too many active sites, causing side reactions that affect performances of the electrochemical apparatus increase; and an excessively large average particle size $D_s$ of the primary particles limits contact between the positive electrode active material and the electrolyte, affecting performances of the electrochemical apparatus. Controlling the average particle size $D_s$ of the primary particles in the positive electrode active material to be within the preceding range is more conducive for improving cycling performance and rate performance of the electrochemical apparatus.

In an embodiment of this application, a median particle size $D_v50$ of the positive electrode active material ranges from 5 μm to 15 μm. For example, the median particle size $D_v50$ of the positive electrode active material may be 5 μm, 6.9 μm, 8.4 μm, 8.7 μm, 10.3 μm, 12.4 μm, 12.6 μm, or any one of values within a range between any two of the preceding numerical values.

In an embodiment of this application, a ratio of the median particle size $D_v50$ of the positive electrode active material to the average particle size $D_s$ of the primary particles, $D_v50/D_s$, ranges from 1.5 to 20. For example, the ratio of the median particle size $D_v50$ of the positive electrode active material to the average particle size Ds of the primary particles, $D_v50/D_s$, may be 1.5, 1.6, 3.6, 8.6, 10.5, 15.4, 15.5, or any one of values within a range between any two of the preceding numerical values.

In an embodiment of this application, the positive electrode active material is a spinel structure, where a cell parameter *a* of the positive electrode active material ranges from 0.8200 nm to 0.8250 nm. For example, the cell parameter *a* of the positive electrode active material may be 0.8200 nm, 0.8204 nm, 0.8214 nm, 0.8217 nm, 0.8220 nm, 0.8226 nm, 0.8227 nm, 0.8232 nm, 0.8233 nm, 0.8234 nm, 0.8239 nm, 0.8250 nm, or any one of values within a range between any two of the preceding numerical values. Not limited to any theory, controlling the cell parameter *a* of the positive electrode active material to be within the preceding range is more conducive for exerting capacity and improving cycling performance and rate performance of the electrochemical apparatus.

In an embodiment of this application, the electrochemical apparatus further includes an electrolyte, and the electrolyte includes an unsaturated carbonate compound. The unsaturated carbonate compound is added into the electrolyte so as to form a stable solid electrolyte interface (SEI) film on a surface of a negative electrode, reducing dissolving of Mn from the positive electrode active material, and thereby improving cycling performance the electrochemical apparatus.

In an embodiment of this application, the unsaturated carbonate compound includes a compound represented by a formula (I):

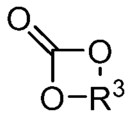

(I)

In formula (I), $R^3$ is selected from substituted $C_1$ to $C_6$ alkylidene groups and substituted or unsubstituted $C_2$ to $C_6$ alkenylene groups, when being substituted, substituted groups include at least one of halogen atoms, $C_1$ to $C_6$ alkyl groups, and $C_2$ to $C_6$ alkenyl groups, and when $R^3$ is selected from substituted $C_1$ to $C_6$ alkylidene groups, substituted groups include at least $C_2$ to $C_6$ alkenyl groups.

Preferably, the unsaturated carbonate compound is selected from at least one of the following compounds (1-1) to (1-8):

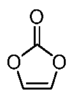
(I-1)
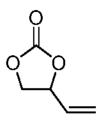
(I-2)
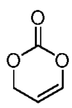
(I-3)
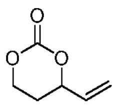
(I-4)
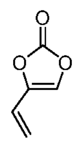
(I-5)
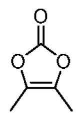
(I-6)
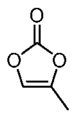
(I-7)
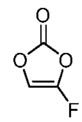
(I-8) .

In an embodiment of this application, based on a mass of the electrolyte, a mass percentage of the unsaturated carbonate compound ranges from 0.01% to 5%. For example, the mass percentage of the unsaturated carbonate compound may be 0.01%, 0.05%, 1%, 2%, 3%, 4%, 5%, or any one of values within a range between any two of the preceding numerical values. Not limited to any theory, an excessively low mass percentage of the unsaturated carbonate compound results that an SEI film formed by the unsaturated carbonate compound on a negative electrode is not effective in improving cycling performance of the electrochemical apparatus; and an excessively high mass percentage of the unsaturated carbonate compound results that an SEI film formed by the unsaturated carbonate compound on a negative electrode is too thick, leading to an increase in impedance and decrease in rate performance. Therefore, controlling the mass percentage of the unsaturated carbonate compound to be within the preceding range is more conducive for improving cycling performance and rate performance of the electrochemical apparatus.

The electrolyte in this application further includes a lithium salt and a non-aqueous solvent. A type of the lithium salt is not particularly limited in this application, provided that the objective of this application can be achieved. For example, the lithium salt may include at least one of lithium hexafluorophosphate ($LiPF_6$), $LiCH_3SO_3$, $LiCF_3SO_3$,

$LiN(SO_2CF_3)_2$, $LiC(SO_2CF_3)_3$, or $LiSiF_6$. Preferably, the lithium salt may include $LiPF_6$, because $LiPF_6$ can provide high ionic conductivity and improve the cycling performance of a lithium-ion battery. The non-aqueous solvent is not particularly limited in this application, provided that the objective of this application can be achieved. For example, the non-aqueous solvent may include at least one of a carbonate compound, a carboxylate compound, an ether compound, or other organic solvents. The carbonate compound may be at least one of a linear carbonate compound or a cyclic carbonate compound. The linear carbonate compound may include at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate compound may include at least one of ethylene carbonate (EC), propylene carbonate (PC), or butylene carbonate (BC). The carboxylate compound may include at least one of ethyl acetate, n-propyl acetate, tert-butyl acetate, methyl propionate, ethyl propionate, or propyl propionate. The ether compound may include at least one of dibutyl ether, tetraglyme, diglyme, 1,2-dimethoxyethane, 1,2-diethoxyethane, ethoxymethoxy ethane, 2-methyltetrahydrofuran, or tetrahydrofuran. The another organic solvent may include at least one of dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, or phosphate ester.

The positive electrode plate is not particularly limited in this application, provided that the objective of this application can be achieved. For example, the positive electrode plate includes a positive electrode current collector and a positive electrode material layer. The positive electrode current collector is not particularly limited in this application, provided that the objective of this application can be achieved. For example, the positive electrode current collector may include an aluminum foil current collector, an aluminum alloy foil current collector, a composite current collector, or the like. The positive electrode material layer in this application includes the positive electrode active material according to any one of the preceding solutions of this application. Thicknesses of the positive electrode current collector and the positive electrode material layer are not particularly limited in this application, provided that the objective of this application can be achieved. For example, the thickness of the positive electrode current collector ranges from 5 μm to 20 μm, and preferably from 6 μm to 18 μm. The thickness of the positive electrode active material layer on one surface ranges from 30 μm to 120 μm. In this application, the positive electrode material layer may be provided on one surface of the positive electrode current collector in a thickness direction, or may be provided on two surfaces of the positive electrode current collector in a thickness direction. It should be noted that the "surface" herein may be the entire zone of the positive electrode current collector or a partial zone of the positive electrode current collector. This is not particularly limited in this application, provided that the objective of this application can be achieved. Optionally, the positive electrode plate may further include a conductive layer, and the conductive layer is located between the positive electrode current collector and the positive electrode material layer. Composition of the conductive layer is not particularly limited, and the conductive layer may be a conductive layer commonly used in the art. For example, the conductive layer includes a conductive agent and a binder.

The electrochemical apparatus in this application further includes a negative electrode plate. The negative electrode plate is not particularly limited in this application, provided that the objective of this application can be achieved. For example, the negative electrode plate includes a negative electrode current collector and a negative electrode material layer. The negative electrode current collector is not particularly limited in this application, provided that the objective of this application can be achieved. For example, the negative electrode current collector may include a copper foil current collector, a copper alloy foil current collector, a nickel foil current collector, a stainless steel foil current collector, a titanium foil current collector, a foamed nickel current collector, a foamed copper current collector, a composite current collector, or the like. A negative electrode material layer in this application includes a negative electrode active material. A type of the negative electrode active material is not particularly limited in this application, provided that the objective of this application can be achieved. For example, the negative electrode active material may include at least one of natural graphite, artificial graphite, a mesocarbon microbead (MCMB), hard carbon, soft carbon, silicon, a silicon-carbon composite, $SiO_x$ ($0<x<2$), a Li-Sn alloy, a Li-Sn-O alloy, Sn, SnO, $SnO_2$, spinel-structure lithium titanate $Li4Ti_5O_{12}$, a Li-Al alloy, or lithium metal. Thicknesses of the negative electrode current collector and the negative electrode material layer are not particularly limited in this application, provided that the objective of this application can be achieved. For example, the thickness of the negative electrode current collector ranges from 6 μm to 10 μm, and the thickness of the negative electrode material layer on one surface ranges from 30 μm to 130 μm. In this application, the negative electrode material layer may be provided on one surface of the negative electrode current collector in a thickness direction, or may be provided on two surfaces of the negative electrode current collector in a thickness direction. It should be noted that the "surface" herein may be the entire zone of the negative electrode current collector or a partial zone of the negative electrode current collector. This is not particularly limited in this application, provided that the objective of this application can be achieved. Optionally, the negative electrode plate may further include a conductive layer, and the conductive layer is located between the negative electrode current collector and the negative electrode material layer. Composition of the conductive layer is not particularly limited, and the conductive layer may be a conductive layer commonly used in the art. The conductive layer includes a conductive agent and a binder.

The preceding conductive agent is not particularly limited, provided that the objective of this application can be

achieved. For example, the conductive agent may include at least one of conductive carbon black (Super P), carbon nanotubes (CNTs), carbon nanofibers, graphite, acetylene black, carbon black, Ketjen black, carbon dots, or graphene. For example, the binder may include at least one of poly propylene alcohol, sodium polyacrylate, potassium polyacrylate, lithium polyacrylate, polyimide, polyimide, polyamideimide, styrene butadiene rubber (SBR), polyvinyl alcohol (PVA), polyvinylidene fluoride, polyvinylidene fluoride (PVDF), polytetrafluoroethylene (PTFE), polyvinyl butyral (PVB), water-based acrylic resin, carboxymethyl cellulose (CMC), or sodium carboxymethyl cellulose (CMC-Na).

The electrochemical apparatus in this application further includes a separator configured to separate the positive electrode plate and the negative electrode plate and prevent short circuits inside a lithium-ion battery. The separator allows electrolyte ions to pass freely to perform electrochemical charge and discharge. The separator is not particularly limited in this application, provided that the objective of this application can be achieved. For example, the separator may include at least one of a polyethylene (PE) or polypropylene (PP)-based polyolefin (PO) separator, a polyester film (for example, a polyethylene terephthalate (PET) film), a cellulose film, a polyimide film (PI), a polyamide film (PA), a spandex or aramid film, a woven film, a non-woven film (non-woven fabric), a microporous film, a composite film, a separator paper, a laminated film, or a spinning film. For example, the separator may include a substrate layer and a surface treatment layer. The substrate layer may be a non-woven fabric, film, or composite film with a porous structure. The substrate layer may be made of at least one of polyethylene, polypropylene, polyethylene terephthalate, and polyimide. Optionally, a polypropylene porous film, a polyethylene porous film, polypropylene non-woven fabric, polyethylene non-woven fabric, or a polypropylene-polyethylene-polypropylene porous composite film may be used. Optionally, the surface treatment layer is disposed on at least one surface of the substrate layer, and the surface treatment layer may be a polymer layer or an inorganic substance layer, or may be a layer formed by mixing a polymer and an inorganic substance. For example, the inorganic substance layer includes inorganic particles and a binder. The inorganic particles are not particularly limited, and may be selected from, for example, at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, and may be selected from, for example, at least one of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

The electrochemical apparatus is not particularly limited in this application, and may include any apparatus in which an electrochemical reaction occurs. In some embodiments, the electrochemical apparatus may include, but is not limited to a lithium metal secondary battery, a lithium-ion secondary battery (lithium-ion battery), a lithium polymer secondary battery, a lithium-ion polymer secondary battery, or the like.

A process for preparing the electrochemical apparatus is well known to a person skilled in the art, and is not particularly limited in this application. For example, the process may include, but not is limited to the following steps: stacking a positive electrode plate, a separator, and a negative electrode plate in sequence; performing operations such as winding and folding on the stacked product as needed to obtain a wound electrode assembly; and placing the electrode assembly in a packaging case, injecting the electrolyte into the packaging case, and sealing the packaging case to obtain the electrochemical apparatus; or, stacking a positive electrode plate, a separator, and a negative electrode plate in sequence, then fixing four corners of the stacked structure with tape to obtain a stacked electrode assembly, placing the electrode assembly in a packaging case, injecting the electrolyte into the packaging case, and sealing the packaging case to obtain the electrochemical apparatus. In addition, if necessary, an over-current protection element, a guide plate, and the like may be placed in the packaging case to prevent a pressure inside the electrochemical apparatus from rising too high, and the electrochemical apparatus from over-charging and over-discharging.

A second aspect of this application provides an electric device, including the electrochemical apparatus according to any one of the preceding embodiments. The electric device has good cycling performance, rate performance, and safety performance.

The electric device is not particularly limited in this application, and may include but is not limited to the following types: a notebook computer, a pen-input computer, a mobile computer, an e-book player, a portable phone, a portable fax machine, a portable copier, a portable printer, a headset, a video recorder, a liquid crystal display television, a portable cleaner, a portable CD player, a mini disc, a transceiver, an electronic notebook, a calculator, a memory card, a portable recorder, a radio, a backup power supply, a motor, an automobile, a motorcycle, an assisted bicycle, a bicycle, a lighting fixture, a toy, a game console, a clock, an electric tool, a flashlight, a camera, a large household storage battery, a lithium-ion capacitor, and the like.

This application provides an electrochemical apparatus and an electric device including the same. The electrochemical apparatus includes a positive electrode plate, where the positive electrode plate includes a positive electrode active material. When a state of charge SOC of the electrochemical apparatus ranges from 90% to 100%, a DSC curve

of the positive electrode plate has a first exothermic peak A1 and a second exothermic peak A2 in a temperature range of 150°C to 400°C, where based on a mass of the positive electrode active material, the first exothermic peak A1 is an exothermic peak at a temperature closest to 400°C with a peak intensity greater than 0.1 mW/mg, the second exothermic peak A2 is an exothermic peak at a temperature closest to 150°C with a peak intensity greater than 0.1 mW/mg, and a difference between a peak position Ta of the first exothermic peak A1 and a peak position Tb of the second exothermic peak A2 ranges from 20°C to 150°C. The electrochemical apparatus has good cycling performance, rate performance, and safety performance. An electric device including such electrochemical apparatus also has good cycling performance, rate performance, and safety performance.

## DESCRIPTION OF EMBODIMENTS

To make the objectives, technical solutions, and advantages of this application more comprehensible, the following describes this application in detail with reference to accompanying drawings and embodiments. Obviously, the described embodiments are merely some but not all of the embodiments of this application. All other technical solutions obtained by a person of ordinary skill in the art based on the embodiments of this application shall fall within the protection scope of this application.

It should be noted that, in the specific embodiments of this application, an example in which a lithium-ion battery is used as an electrochemical apparatus is used to illustrate this application. However, the electrochemical apparatus in this application is not limited to the lithium-ion battery.

The following describes the embodiments of this application more specifically by using examples and comparative examples. Various tests and evaluations were performed in the following methods. In addition, unless otherwise specified, "percentage" and "%" are based on weight.

### Test method and device

### DSC test

DSC was used to study a relationship between heat flux differences and temperatures of samples and references. A simultaneous thermal analyzer of model STA449F3 was used to obtain a DSC curve, and the method was as follows: lithium-ion batteries were charged to 100% SOC, after the lithium-ion batteries were disassembled, positive electrode plates were taken out and cut into pieces of 10 cm×10 cm, and test was performed at the test temperature ranging from 150°C to 400°C and the temperature rise rate of 10°C/min, to obtain the DSC curve.

### Measurement of content of each element in positive electrode active material

The lithium-ion batteries were discharged to 2.8 V, after the lithium-ion batteries were disassembled, the positive electrode plates were taken out, washed by using highly pure anhydrous DMC for three times, with the positive electrode plate being soaked for 8 hours each time, and then put into a vacuum drying chamber to be dried for 12 hours. An inductively coupled plasma emission spectrometer (ICP) test was performed on the positive electrode active material scraped off from the positive electrode plate.

### Average particle size $D_s$ measurement for primary particles

A scanning electron microscope was used to measure an average particle size $D_s$ of primary particles of the positive electrode active material. After images of the positive electrode active material were formed by using a scanning electron microscope (Sigma-02-33, ZEISS, Germany), 200 fully shaped and unscreened primary particles of the positive electrode active material were randomly selected from the electron microscope images, and an average value of the longest diameters of the primary particles in the microscope images was recorded as the average particle size $D_s$.

### Median particle size $D_v50$ measurement

The measurement was performed by using a Mastersizer 3000 laser particle size distribution analyzer. The laser particle size test was to measure a particle size distribution based on the principle that particles in different sizes can make a laser produce different scattered intensities. $D_v50$ is a particle size where the cumulative distribution by volume reaches 50% as counted from the small particle size side.

**Electrolyte injection coefficient calculation**

Electrolyte injection coefficient=electrolyte capacity/lithium-ion battery capacity

**Capacity retention rate test at high temperature**

At 45°C, lithium-ion batteries were charged to 4.2 V at a constant current of 0.5C, and then charged to a current of 0.05C at a constant voltage, and charge capacities of the first cycle were recorded; and then the lithium-ion batteries were discharged to 3.0 V at a constant current of 1C, and discharge capacities of the first cycle were recorded. Then, 500 charge and discharge cycles were performed in the same steps, and discharge capacities of the 500th were recorded. The capacity retention rate was used as an indicator to evaluate the cycling performance of the lithium-ion battery

Capacity retention rate (%)=(discharge capacity of the 500th cycle/discharge capacity of the 1st cycle)×100%.

**Rate performance test**

At 25°C, lithium-ion secondary batteries were constant-current charged to 4.2 V at a rate of 0.2C, constant-voltage charged to a current of 0.05C, left standing for 30 minutes, and then constant-current discharged to 3.0 V at a rate of 0.2C. 0.2C-rate discharge capacities of the lithium-ion batteries were obtained.

At 25°C, the lithium-ion secondary batteries were constant-current charged to 4.2 V at a rate of 0.2C, constant-voltage charged to a current less than or equal to 0.05C, left standing for 30 minutes, and then constant-current discharged to 3.0 V at a rate of 1C. 1C-rate discharge capacities of the lithium-ion secondary batteries were obtained.

1C-rate discharge capacity retention rate (%) of lithium-ion battery=1C-rate discharge capacity/0.2C-rate discharge capacity×100%.

Example 1-1

Preparation of positive electrode plate

A positive electrode active material $LiMn_{1.96}Al_{0.04}O_4$, a conductive agent acetylene black, and a binder polyvinylidene fluoride (PVDF) were mixed at a weight ratio of 96:2:2, NMP was added as solvent to prepare a slurry with a solid content of 75%, and the slurry was fully stirred by using a vacuum mixer to form an even positive electrode slurry. The positive electrode slurry was uniformly applied on a surface of a 10 μm-thick positive electrode current collector aluminum foil. The aluminum foil was dried at 90°C to obtain a positive electrode plate that was coated with a positive electrode material on one surface with a coating layer thickness of 110 μm. Then, the preceding steps were repeated on the other surface of this positive electrode plate to obtain a positive electrode plate coated with the positive electrode material on two surfaces. After coating was completed, the positive electrode plate was cut into pieces of 74 mm×867 mm for use. $D_s$ of the positive electrode active material was 0.8 μm, $D_v50$ was 12.4 μm, and a cell parameter *a* of the positive electrode active material was 0.8220 nm.

Preparation of negative electrode plate

A negative active material graphite, a binder SBR, and a thickener sodium carboxymethyl cellulose were mixed at a weight ratio of 97.5:1.5:1, deionized water was added as solvent to prepare a negative electrode slurry with a solid content of 70%. The mixture was stirred by using a vacuum mixer to obtain an even negative electrode slurry. The negative electrode slurry was uniformly applied on a surface of an 8 μm-thick negative electrode current collector copper foil. The copper foil was dried at 90°C to obtain a negative electrode plate that was coated with a negative electrode material on one surface with a coating layer thickness of 130 μm. Then, the preceding steps were repeated on the other surface of this negative electrode to obtain a negative electrode plate coated with the negative electrode material on two surfaces. After coating was completed, the negative electrode plate was cut into pieces of 76 mm×851 mm for use.

Preparation of separator

A separator that was a porous polyethylene substrate with two sides coated with ceramic coating layer was selected to be used.

Preparation of electrolyte

In a glove box under argon atmosphere with a water content less than 10 ppm, ethylene carbonate EC, diethyl carbonate DEC, propylene carbonate PC, and propyl propionate PP were mixed uniformly at a mass ratio of 20:30:20:30 to obtain an organic solvent. The organic solvent was added with vinylene carbonate (VC) and lithium salt $LiPF_6$ and well mixed to obtain an electrolyte. A concentration of $LiPF_6$ was 1.15 mol/L, and based on the mass of the electrolyte, the mass percentage of VC was 0.05%.

Preparation of lithium-ion battery

The prepared positive electrode plate, separator, and negative electrode plate were stacked in sequence so that the separator was sandwiched between the positive electrode plate and the negative electrode plate for isolation, and the stacked product was wound to obtain an electrode assembly. The electrode assembly was put into an aluminum-plastic film packaging case to be dehydrated at 85°C in a vacuum drying chamber for 12 hours, and was injected with the prepared electrolyte. The lithium-ion battery was obtained after processes such as vacuum packaging, standing, formation, and shaping. The electrolyte injection coefficient was 4.55 g/Ah, the upper formation voltage limit after packaging was 4.12 V, the formation temperature after packaging was 85°C, and the formation standing time after packaging was 2.3 hours.

Example 1-2 was the same as Example 1-1 except that in <Preparation of electrolyte>, based on the mass of the electrolyte, the mass percentage of VC was 1%, and that in <Preparation of lithium-ion battery>, the upper formation voltage limit after packaging was 4.15 V, the formation temperature after packaging was 88°C, and the formation standing time after packaging was 2.7 hours.

Example 1-3 was the same as Example 1-2 except that in <Preparation of lithium-ion battery>, the upper formation voltage limit after packaging was 4.18 V, the formation temperature after packaging was 90°C, and the formation standing time after packaging was 3.0 hours.

Example 1-4 was the same as Example 1-2 except that in <Preparation of lithium-ion battery>, the upper formation voltage limit after packaging was 4.21 V, the formation temperature after packaging was 93°C, and the formation standing time after packaging was 3.4 hours.

Example 1-5 was the same as Example 1-1 except that in <Preparation of electrolyte>, based on the mass of the electrolyte, the mass percentage of VC was 5%, and that in <Preparation of lithium-ion battery>, the electrolyte injection coefficient was 4.35 g/Ah.

Example 1-6 was the same as Example 1-1 except that in <Preparation of electrolyte>, based on the mass of the electrolyte, the mass percentage of VC was 3%, and that in <Preparation of lithium-ion battery>, the electrolyte injection coefficient was 4.15 g/Ah.

Example 2-1 to Example 2-12 were the same as Example 1-1 except that in <Preparation of electrolyte>, based on the mass of the electrolyte, the mass percentage of VC was 1%, and that the type of the positive electrode active material, $n_M/n_{Mn}$, $n_{(Al+Nb)}/n_{Mn}$, and the cell parameter *a* were adjusted according to Table 2.

Example 3-1 to Example 3-7 were the same as Example 2-4 except that $D_s$, $D_v50$, $D_v50/D_s$, and the cell parameter *a* were adjusted according to Table 3.

Example 4-1 was the same as Example 1-1 except that in <Preparation of positive electrode plate>, the positive electrode active material was $LiMn_{1.88}Al_{0.08}Nb_{0.04}O_4$, $D_s$ was 2.4 μm, $D_v50$ was 8.7 μm, and the cell parameter *a* was 0.8232 nm, that in <Preparation of electrolyte>, VC was replaced with 4,5-dimethyl-1,3-dioxol-2-one (DMDO) (I-6), and based on the mass of the electrolyte, the mass percentage of 4.5-dimethyl-1,3-dioxol-2-one was 1%, and that in <Preparation of lithium-ion battery>, the electrolyte injection coefficient was 4.53 g/Ah, the upper formation voltage limit after packaging was 4.13 V, the formation temperature after packaging was 86°C, and the formation standing time after packaging was 2.3 hours.

Example 4-2 was the same as Example 4-1 except that in <Preparation of electrolyte>, a combination of 4.5-dimethyl-1,3-dioxol-2-one and VC was used, and based on the mass of the electrolyte, the mass percentage of 4,5-dimethyl-1,3-dioxol-2-one (DMDO) was 1%, and the mass percentage of VC was 1%, and that in <Preparation of lithium-ion battery>, the electrolyte injection coefficient was 4.57 g/Ah, the upper formation voltage limit after packaging was 4.15 V, the formation temperature after packaging was 88°C, and the formation standing time after packaging was 2.3 hours.

Example 4-3 was the same as Example 1-1 except that in <Preparation of positive electrode plate>, the positive

electrode active material was $LiMn_{1.84}Al_{0.16}O_4$, Ds was 2.4 μm, $D_v50$ was 8.7 μm, and the cell parameter *a* was 0.8214 nm, that in <Preparation of electrolyte>, based on the mass of the electrolyte, the mass percentage of VC was 2%, and that in <Preparation of lithium-ion battery>, the electrolyte injection coefficient was 4.6 g/Ah, the upper formation voltage limit after packaging was 4.2 V, the formation temperature after packaging was 88°C, and the formation standing time after packaging was 2.5 hours.

Example 4-4 was the same as Example 4-3 except that in <Preparation of electrolyte>, based on the mass of the electrolyte, the mass percentage of VC was 4%.

Comparative Example 1 was the same as Example 1-1 except that in <Preparation of electrolyte>, based on the mass of the electrolyte, the mass percentage of VC was 4%, and that in <Preparation of lithium-ion battery>, the electrolyte injection coefficient was 4.06 g/Ah, the upper formation voltage limit after packaging was 4.20 V, and the formation temperature after packaging was 88°C.

Preparation parameters and performance parameters for Example 1-1 to Example 1-6 are shown in Table 1. Preparation parameters and performance parameters for Example 2-1 to Example 2-12 are shown in Table 2. Preparation parameters and performance parameters for Example 3-1 to Example 3-7 are shown in Table 3. Preparation parameters and performance parameters for Example 4-1 to Example 4-4 are shown in Table 4.

**Table 1**

| | First exothermic peak A1 | | Second exothermic peak A2 | | Ta−Tb (°C) | Ratio S of peak intensity of first exothermic peak A1 to peak intensity of second exothermic peak A2 | Exothermic peak B | | Rate performance (%) | Capacity retention rate (%) |
|---|---|---|---|---|---|---|---|---|---|---|
| | Peak position Ta (°C) | Peak intensity (mW/mg) | Peak position Tb (°C) | Peak intensity (mW/mg) | | | Peak position Tc (°C) | Peak area (J/g) | | |
| Example 1-1 | 368 | 1.218 | 219 | 1.646 | 149 | 0.7 | 255 | 300.1 | 74 | 65 |
| Example 1-2 | 333 | 1.036 | 234 | 0.863 | 99 | 1.2 | 246 | 309.1 | 85 | 68 |
| Example 1-3 | 286 | 1.019 | 247 | 0.728 | 39 | 1.4 | 257 | 310.8 | 87 | 74 |
| Example 1-4 | 267 | 0.901 | 245 | 0.601 | 22 | 1.5 | 253 | 304.5 | 86 | 76 |
| Example 1-5 | 320 | 1.45 | 228 | 0.238 | 92 | 6.1 | 258 | 320.5 | 78 | 79 |
| Example 1-6 | 278 | 1.332 | 216 | 0.136 | 62 | 9.8 | 255 | 312.4 | 77 | 80 |
| Comparative Example 1 | 389 | 1.098 | 120 | 2.196 | 269 | 0.5 | 185 | 345.2 | 65 | 60 |

It can be known from Example 1-1 to Example 1-6 and Comparative Example 1 that rate performance and

cycling performance (capacity retention rates) of the lithium-ion batteries varied with changes of the peak positions Ta and the peak intensities of the first exothermic peaks A1 and changes of the peak positions Tb and the peak intensities of the second exothermic peaks A2. The lithium-ion batteries, having the peak intensities of the second exothermic peaks A2 greater than 0.1 mW/mg, and with the differences between the peak positions Ta of the first exothermic peaks A1 and the peak positions Tb of the second exothermic peaks A2 being within the range of this application, had better rate performance and cycling performance.

**Table 2**

| | First exothermic peak A1 | | Second exothermic peak A2 | | Ta−Tb (°C) | Ratio S of peak intensities | Exothermic peak B | | Positive electrode active material | Doping element M | $n_M/n_{Mn}$ (%) | $n_{(Al+Nb)}/n_{Mn}$ (%) | $D_s$ (μm) | $D_v50$ (μm) | $D_v50/D_s$ | Cell parameter *a* (nm) | Rate performance (%) | Capacity retention rate (%) |
|---|---|---|---|---|---|---|---|---|---|---|---|---|---|---|---|---|---|---|
| | Peak position Ta (°C) | Peak intensity (mW/mg) | Peak position Tb (°C) | Peak intensity (mW/mg) | | | Peak position Tc (°C) | Peak area (J/g) | | | | | | | | | | |
| Example 2-1 | 312 | 1.007 | 245 | 0.719 | 67 | 1.4 | 247 | 332 | $LiMn_{1.96}Mg_{0.04}O_4$ | Mg | 2 | \ | 0.8 | 12.3 | 15.4 | 0.8239 | 90 | 66 |
| Example 2-2 | 289 | 1.042 | 195 | 0.106 | 94 | 9.8 | 260 | 309.4 | $LiMn_{1.96}Al_{0.04}O_4$ | Al | 2 | 2 | 0.8 | 12.4 | 15.5 | 0.8220 | 82 | 79 |
| Example 2-3 | 301 | 0.863 | 224 | 0.719 | 77 | 1.2 | 269 | 295 | $LiMn_{1.96}Nb_{0.04}O_4$ | Nb | 2 | 2 | 1.8 | 13.5 | 7.5 | 0.8229 | 80 | 85 |
| Example 2-4 | 307 | 0.86 | 226 | 0.662 | 81 | 1.3 | 253 | 298.2 | $LiMn_{1.88}Al_{0.02}Nb_{0.02}O4$ | Al, Nb | 2 | 2 | 1.4 | 12.9 | 9.2 | 0.8225 | 80 | 82 |
| Example 2-5 | 324 | 1.045 | 248 | 0.653 | 76 | 1.6 | 269 | 290.6 | $LiMn_{1.92}Al_{0.04}Mg_{0.04}O4$ | Al, Mg | 4 | 2 | 0.8 | 12.4 | 15.5 | 0.8234 | 89 | 77 |
| Example 2-6 | 332 | 0.989 | 254 | 0.659 | 78 | 1.5 | 276 | 228.1 | $LiMn_{1.88}Al_{0.04}Mg_{0.04}Nb_{0.04}O_4$ | Al, Mg, Nb | 6 | 4 | 0.8 | 12.3 | 15.4 | 0.8232 | 89 | 79 |
| Example 2-7 | 336 | 1.038 | 255 | 0.611 | 81 | 1.7 | 287 | 197.2 | $LiMn_{1.88}Al_{0.08}Nb_{0.04}O_4$ | Al, Nb | 6 | 6 | 0.8 | 12.4 | 15.5 | 0.8226 | 85 | 83 |
| Example 2-8 | 337 | 0.876 | 266 | 0.626 | 71 | 1.4 | 303 | 198.5 | $LiMn_{1.88}Al_{0.12}Nb_{0.04}O_4$ | Al, Nb | 9 | 9 | 0.8 | 12.6 | 15.8 | 0.8217 | 86 | 87 |
| Example 2-9 | 342 | 0.652 | 269 | 0.408 | 73 | 1.6 | 312 | 206.5 | $LiMn_{1.84}Al_{0.16}O_4$ | Al | 9 | 9 | 0.8 | 12.4 | 15.5 | 0.8204 | 85 | 89 |

| | First exothermic peak A1 | | Second exothermic peak A2 | | Ta−Tb (°C) | Ratio S of peak intensities | Exothermic peak B | | Positive electrode active material | Doping element M | $n_M/n_{Mn}$ (%) | $n_{(Al+Nb)}/n_{Mn}$ (%) | $D_s$ (μm) | $D_v50$ (μm) | $D_v50/D_s$ | Cell parameter *a* (nm) | Rate performance (%) | Capacity retention rate (%) |
|---|---|---|---|---|---|---|---|---|---|---|---|---|---|---|---|---|---|---|
| | Peak position Ta (°C) | Peak intensity (mW/mg) | Peak position Tb (°C) | Peak intensity (mW/mg) | | | Peak position Tc (°C) | Peak area (J/g) | | | | | | | | | | |
| Example 2-10 | 274 | 0.892 | 212 | 1.115 | 62 | 0.8 | 319 | 345.1 | $LiMn_{1.998}Al_{0.002}O_4$ | Al | 0.1 | 0.1 | 1.2 | 11.6 | 9.7 | 0.8240 | 84 | 78 |
| Example 2-11 | 280 | 1.045 | 220 | 1.161 | 60 | 0.9 | 290 | 320.6 | $LiMn_{1.99}Al_{0.01}O_4$ | Al | 0.5 | 0.5 | 1.1 | 11.8 | 10.7 | 0.8233 | 82 | 80 |
| Example 2-12 | 282 | 0.989 | 234 | 0.899 | 48 | 1.1 | 287 | 318.3 | $LiMn_{1.98}Al_{0.02}O_4$ | Al | 1 | 1 | 0.9 | 11.9 | 13.2 | 0.8232 | 80 | 80 |

Note: "\" in Table 2 means that a corresponding parameter does not exist.

**Table 3**

| | First exothermic peak A1 | | Second exothermic peak A2 | | Ta–Tb (°C) | Ratio S of peak intensity of first exothermic peak A1 to peak intensity of second exothermic peak A2 | Exothermic peak B | | $D_s$ (μm) | $D_v50$ (μm) | $D_v50/D_s$ | Cell parameter *a* (nm) | Rate performance (%) | Capacity retention rate (%) |
|---|---|---|---|---|---|---|---|---|---|---|---|---|---|---|
| | Peak position Ta (°C) | Peak intensity (mW/mg) | Peak position Tb (°C) | Peak intensity (mW/mg) | | | Peak position Tc (°C) | Peak area (J/g) | | | | | | |
| Example 3-1 | 332 | 0.896 | 247 | 0.498 | 85 | 1.8 | 281 | 290.5 | 0.8 | 8.4 | 10.5 | 0.8227 | 91 | 89 |
| Example 3-2 | 339 | 1.234 | 257 | 0.726 | 82 | 1.7 | 293 | 265.4 | 1.2 | 10.3 | 8.6 | 0.8229 | 92 | 90 |
| Example 3-3 | 342 | 0.965 | 261 | 0.568 | 81 | 1.7 | 299 | 238 | 2.4 | 8.7 | 3.6 | 0.8232 | 92 | 93 |
| Example 3-4 | 345 | 1.22 | 266 | 0.763 | 79 | 1.6 | 312 | 232.9 | 4.3 | 6.9 | 1.6 | 0.8233 | 93 | 93 |
| Example 3-5 | 295 | 1.324 | 256 | 0.981 | 39 | 1.35 | 295.9 | 254.1 | 4.8 | 15 | 3.1 | 0.8229 | 86 | 91 |
| Example 3-6 | 310 | 0.789 | 198 | 0.132 | 112 | 6 | 255 | 301 | 0.5 | 15 | 30 | 0.8226 | 90 | 73 |
| Example 3-7 | 369 | 1.098 | 232 | 0.61 | 137 | 1.8 | 324 | 239 | 6 | 15 | 2.5 | 0.8229 | 73 | 92 |

**Table 4**

| | First exothermic peak A1 | | Second exothermic peak A2 | | Ta–Tb (°C) | Ratio S of peak intensity of first exothermic peak A1 to peak intensity of second exothermic peak A2 | Exothermic peak B | | Positive electrode active material | Cell parameter *a* (nm) | Rate performance (%) | Capacity retention rate (%) |
|---|---|---|---|---|---|---|---|---|---|---|---|---|
| | Peak position Ta (°C) | Peak intensity (mW/mg) | Peak position Tb (°C) | Peak intensity (mW/mg) | | | Peak position Tc (°C) | Peak area (J/g) | | | | |
| Example 4-1 | 346 | 0.894 | 252 | 0.596 | 94 | 1.5 | 299 | 248.1 | $LiMn_{1.88}Al_{0.08}Nb_{0.04}O_4$ | 0.8232 | 90 | 89 |
| Example 4-2 | 347 | 0.78 | 256 | 0.459 | 91 | 1.7 | 284 | 219.2 | $LiMn_{1.88}Al_{0.08}Nb_{0.04}O_4$ | 0.8232 | 89 | 92 |
| Example 4-3 | 346 | 0.869 | 253 | 0.543 | 93 | 1.6 | 303 | 234.2 | $LiMn_{1.84}Al_{0.16}O_4$ | 0.8214 | 93 | 94 |
| Example 4-4 | 335 | 0.902 | 263 | 0.215 | 72 | 4.2 | 312 | 235 | $LiMn_{1.84}Al_{0.16}O_4$ | 0.8214 | 87 | 95 |

It can be known by comparing Example 2-1 to Example 2-12 that cycling performance of the lithium-ion batteries in Example 2-2 to Example 2-12 doped with Al and/or Nb was significantly improved than the cycling performance of the lithium-ion battery in Example 2-1 doped with only Mg, and that the lithium-ion batteries could have excellent rate performance and cycling performance, provided that the types of the positive electrode active materials, the molar ratio of the doping element M to the doping element Mn, $n_M/n_{Mn}$, the molar ratio of the total molar content of Al and Nb to the molar content of Mn, $n_{(Al+Nb)}/n_{Mn}$, and the cell parameter *a* of the positive electrode active material were controlled within the ranges of this application.

It can be known from Example 3-1 to Example 3-7 that the lithium-ion batteries could have both excellent rate performance and cycling performance in examples where the average particle size of primary particles of the positive electrode active material ranged from 0.8 μm to 5 μm, the median particle size $D_v50$ of the positive electrode active material ranged from 5 μm to 15 μm, and $D_v50/D_s$ ranged from 1.5 to 20.

It can be known from Example 4-1 to Example 4-4 that the lithium-ion batteries could have both excellent rate performance and cycling performance by selecting different unsaturated carbonate compounds and their concentrations and controlling the electrolyte injection coefficient and formation conditions.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. An electrochemical apparatus, comprising a positive electrode plate, wherein the positive electrode plate comprises a positive electrode active material; and
when a state of charge SOC of the electrochemical apparatus ranges from 90% to 100%, a DSC curve of the positive electrode plate has a first exothermic peak A1 and a second exothermic peak A2 in a temperature range of 150°C to 400°C, wherein based on a mass of the positive electrode active material, the first exothermic peak A1 is an exothermic peak at a temperature closest to 400°C with a peak intensity greater than 0.1 mW/mg, the second exothermic peak A2 is an exothermic peak at a temperature closest to 150°C with a peak intensity greater than 0.1 mW/mg, and a difference between a peak position Ta of the first exothermic peak A1 and a peak position Tb of the second exothermic peak A2 ranges from 20°C to 150°C.

2. The electrochemical apparatus according to claim 1, wherein the peak position Ta of the first exothermic peak A1 is within a range of 250°C to 400°C, and the peak position Tb of the second exothermic peak A2 is within a range of 200°C to 300°C.

3. The electrochemical apparatus according to claim 1, wherein a ratio S of the peak intensity of the first exothermic peak A1 to the peak intensity of the second exothermic peak A2 ranges from 0.1 to 10.

4. The electrochemical apparatus according to claim 1, wherein after the positive electrode plate has been soaked in N-methylpyrrolidone at 25°C for 8 hours, the N-methylpyrrolidone is replaced and the positive electrode plate is soaked again twice, the DSC curve of the positive electrode plate has an exothermic peak B at a temperature ranging from 240°C to 400°C, and based on the mass of the positive electrode active material, a peak area of the exothermic peak B is less than 360 J/g.

5. The electrochemical apparatus according to claim 1, wherein the positive electrode active material contains a lithium transition metal composite oxide, and the lithium transition metal composite oxide contains a doping element M, wherein the doping element M comprises at least one of Al, Mg, Ti, Cr, Cu, Fe, Co, W, Zn, Ga, Zr, Ru, Ag, Sn, Au, La, Ce, Pr, Nd, Sm, Nb, or Gd; and
the lithium transition metal composite oxide further contains Mn, wherein a molar ratio of the doping element M to Mn, $n_M/n_{Mn}$, ranges from 0.1% to 10%.

6. The electrochemical apparatus according to claim 5, wherein the doping element M comprises at least one of Al or Nb, wherein a molar ratio of a total molar content of Al and Nb to a molar content of Mn, $n_{(Al+Nb)}/n_{Mn}$, ranges from 1% to 10%.

7. The electrochemical apparatus according to claim 5, wherein the positive electrode active material comprises secondary particles aggregated from primary particles, and the electrochemical apparatus satisfies at least one of the following conditions (a) to (d):

(a) an average particle size $D_s$ of the primary particles ranges from 0.8 $\mu$m to 5 $\mu$m;
(b) a median particle size $D_v50$ of the positive electrode active material ranges from 5 $\mu$m to 15 $\mu$m;
(c) a ratio of the median particle size $D_v50$ of the positive electrode active material to the average particle size $D_s$ of the primary particles, $D_v50/D_s$, ranges from 1.5 to 20; and
(d) the positive electrode active material is a spinel structure, wherein a cell parameter *a* of the positive electrode active material ranges from 0.8200 nm to 0.8250 nm.

**8.** The electrochemical apparatus according to claim 5, wherein the electrochemical apparatus further comprises an electrolyte, and the electrolyte comprises an unsaturated carbonate compound.

**9.** The electrochemical apparatus according to claim 8, wherein the unsaturated carbonate compound comprises a compound represented by a formula (I), and

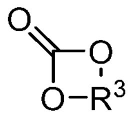

(I)

in formula (I), $R^3$ is selected from substituted $C_1$ to $C_6$ alkylidene groups and substituted or unsubstituted $C_2$ to $C_6$ alkenylene groups, when being substituted, substituted groups comprise at least one of halogen atoms, $C_1$ to $C_6$ alkyl groups, and $C_2$ to $C_6$ alkenyl groups, and when $R^3$ is selected from substituted $C_1$ to $C_6$ alkylidene groups, substituted groups comprise at least $C_2$ to $C_6$ alkenyl groups.

**10.** The electrochemical apparatus according to claim 9, wherein the unsaturated carbonate compound is selected from at least one of the following compounds (I-1) to (I-8):

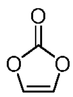
(I-1)

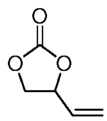
(I-2)

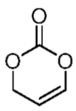
(I-3)

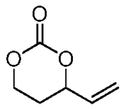
(I-4)

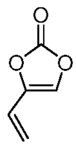
(I-5)

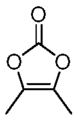
(I-6)

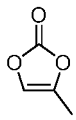
(I-7)

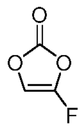
(I-8) .

**11.** The electrochemical apparatus according to claim 8, wherein based on a mass of the electrolyte, a mass percentage of the unsaturated carbonate compound is 0.01% to 5%.

**12.** An electric device, comprising the electrochemical apparatus according to any one of claims 1 to 11.

## INTERNATIONAL SEARCH REPORT

International application No. **PCT/CN2021/121292**

**A. CLASSIFICATION OF SUBJECT MATTER**

H01M 4/131(2010.01)i; H01M 4/50(2010.01)i; H01M 4/1391(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNTXT, VEN, ENTXT: 电池, 电极, 活性材料, 差示扫描量热法, 放热峰, batteries, eletrodes, accumulator, active, material, dsc, exothermic peak

**C. DOCUMENTS CONSIDERED TO BE RELEVANT**

| Category* | Citation of document, with indication, where appropriate, of the relevant passages | Relevant to claim No. |
|---|---|---|
| X | CN 103296249 A (NINGDE AMPEREX TECHNOLOGY LTD.) 11 September 2013 (2013-09-11) description, paragraphs [0043]-[0047], [0080], and [0089] and figure 2 | 1-3, 5-12 |
| Y | CN 103296249 A (NINGDE AMPEREX TECHNOLOGY LTD.) 11 September 2013 (2013-09-11) description, paragraphs [0043]-[0047], [0080], and [0089] and figure 2 | 4 |
| Y | CN 111416152 A (NINGDE AMPEREX TECHNOLOGY LTD.) 14 July 2020 (2020-07-14) description, paragraphs [0106] and [0130] | 4 |
| X | CN 103872331 A (NINGDE AMPEREX TECHNOLOGY LTD.) 18 June 2014 (2014-06-18) description, paragraphs [0037]-[0043] and [0051], and figure 7 | 1-3, 8-12 |
| X | CN 108807863 A (NINGDE CONTEMPORARY AMPEREX TECHNOLOGY CO., LTD.) 13 November 2018 (2018-11-13) description, paragraphs [0060]-[0064] and [0122], and figure 2 | 1-3, 8-12 |
| X | CN 111699576 A (NINGDE AMPEREX TECHNOLOGY LTD.) 22 September 2020 (2020-09-22) description, paragraph [0189], and figure 3 | 1-3, 8-12 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **20 May 2022** | **20 June 2022** |
| Name and mailing address of the ISA/CN<br>**China National Intellectual Property Administration (ISA/CN)**<br>**No. 6, Xitucheng Road, Jimenqiao, Haidian District, Beijing 100088, China**<br>Facsimile No. **(86-10)62019451** | Authorized officer<br><br>Telephone No. |

Form PCT/ISA/210 (second sheet) (January 2015)

## INTERNATIONAL SEARCH REPORT

International application No.
**PCT/CN2021/121292**

**C. DOCUMENTS CONSIDERED TO BE RELEVANT**

| Category* | Citation of document, with indication, where appropriate, of the relevant passages | Relevant to claim No. |
|---|---|---|
| A | CN 110120554 A (NINGDE AMPEREX TECHNOLOGY LTD.) 13 August 2019 (2019-08-13) entire document | 1-12 |
| A | JP 2020123493 A (SUMITOMO METAL MINING CO., LTD.) 13 August 2020 (2020-08-13) entire document | 1-12 |

Form PCT/ISA/210 (second sheet) (January 2015)

**INTERNATIONAL SEARCH REPORT**
**Information on patent family members**

International application No.
**PCT/CN2021/121292**

| Patent document cited in search report | | | Publication date (day/month/year) | Patent family member(s) | | | Publication date (day/month/year) |
|---|---|---|---|---|---|---|---|
| CN | 103296249 | A | 11 September 2013 | CN | 103296249 | B | 29 May 2018 |
| CN | 111416152 | A | 14 July 2020 | WO | 2021190388 | A1 | 30 September 2021 |
| | | | | US | 2022006122 | A1 | 06 January 2022 |
| CN | 103872331 | A | 18 June 2014 | None | | | |
| CN | 108807863 | A | 13 November 2018 | US | 2018323436 | A1 | 08 November 2018 |
| | | | | EP | 3399575 | A1 | 07 November 2018 |
| | | | | EP | 3399575 | B1 | 27 January 2021 |
| | | | | US | 11108051 | B2 | 31 August 2021 |
| CN | 111699576 | A | 22 September 2020 | US | 2019245199 | A1 | 08 August 2019 |
| | | | | CN | 110120497 | A | 13 August 2019 |
| | | | | CA | 3090720 | A1 | 15 August 2019 |
| | | | | WO | 2019153909 | A1 | 15 August 2019 |
| | | | | CN | 110729477 | A | 24 January 2020 |
| | | | | IN | 202037037297 | A | 02 October 2020 |
| | | | | EP | 3731314 | A1 | 28 October 2020 |
| | | | | EP | 3731314 | A4 | 21 April 2021 |
| | | | | JP | 2021513193 | W | 20 May 2021 |
| | | | | CN | 110120497 | B | 04 June 2021 |
| | | | | CN | 110729477 | B | 23 July 2021 |
| CN | 110120554 | A | 13 August 2019 | CN | 110120554 | B | 18 May 2021 |
| | | | | US | 2019245245 | A1 | 08 August 2019 |
| JP | 2020123493 | A | 13 August 2020 | None | | | |

Form PCT/ISA/210 (patent family annex) (January 2015)